# EUROPÄISCHE PATENTSCHRIFT

(11) **EP 1 352 769 B1**
(45) Veröffentlichungstag und Bekanntmachung des Hinweises auf die Patenterteilung: **07.09.2005**
(21) Anmeldenummer: 03004571.0
(22) Anmeldetag: 28.02.2003
(51) Int. Cl.: B60K 15/04

(54) **Kraftwagen mit einem Tankeinfüllstutzen mit Deckel**
Motor vehicle with a tank filler neck and closure
Véhiclue automobile avec un embout de remplissage de réservoir avec couvercle

(30) Priorität: 10.04.2002 DE 10215599
(43) Veröffentlichungstag der Anmeldung: 15.10.2003
(73) Patentinhaber: DaimlerChrysler AG, 70567 Stuttgart (DE)
(72) Erfinder: Lenz, Mathias, 70499 Stuttgart (DE)

(56) Entgegenhaltungen:
- FR-A- 940 103
- US-A- 3 704 606

## Beschreibung

Die Erfindung betrifft einen Kraftwagen mit einem Tankeinfüllstutzen mit Deckel der im Oberbegriff des Patentanspruchs 1 angegebenen Art.

Der FR 940 103 A ist bereits ein Kraftwagen mit einem Deckel eines Tankeinfüllstutzens und mit einer Fahrzeugtür als bekannt zu entnehmen, wobei die Fahrzeugtür in ihrer Schließstellung das Öffnen des Deckels verhindert und in einer Offenstellung das Öffnen des Deckels ermöglicht. Der Tankeinfüllstutzen grenzt dabei an eine Randseite der Tür an, wobei die Tür selbst mit Verriegelungsmitteln des Deckels in Eingriff stehende weitere Verriegelungsmittel aufweist.

Aus der DE 1 405 818 A1 ist ein Kraftwagen als bekannt zu entnehmen, bei dem der Deckel eines Tankeinfüllstutzens durch einen Kofferraumdeckel vollständig zu überdecken ist. Bei geschlossenem Kofferraumdeckel ist dadurch das Öffnen des Tankdeckels verunmöglicht. Ist der Kofferraumdeckel geöffnet, so ist der Deckel des Tankeinfüllstutzens zugänglich und zu öffnen. Als nachteilig ist der Umstand anzusehen, dass eine bei geschlossener Tür unsichtbare Anordnung des Deckels oftmals nicht erwünscht ist und die dort gezeigte Anordnung durch deren zurückspringende Lage einen erhöhten Bedarf aufweist.

Der Erfindung liegt die Aufgabe zugrunde, einen Kraftwagen der eingangs genannten Art zu schaffen, bei dem eine platzsparende und sichtbare Anordnung des Deckels des Tankeinfüllstutzens möglich ist.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Bei dem Kraftwagen nach der Erfindung grenzt der Tankeinfüllstutzen an eine Randseite der Tür an und ist demgemäss von außen sichtbar angeordnet, wobei die Verriegelung des Deckels durch Verriegelungsmittel in der Tür erfolgt, welche mit den Verriegelungsmittel des Deckels bei geschlossener Tür in Eingriff stehen.

Als besonders einfaches Verriegelungsmittel des Deckels kann dessen Griff vorgesehen werden, welcher mit einem gegenüber dem Außenumfang des Deckels überstehenden Endabschnitt in eine Ausnehmung der Tür eingreifen kann.

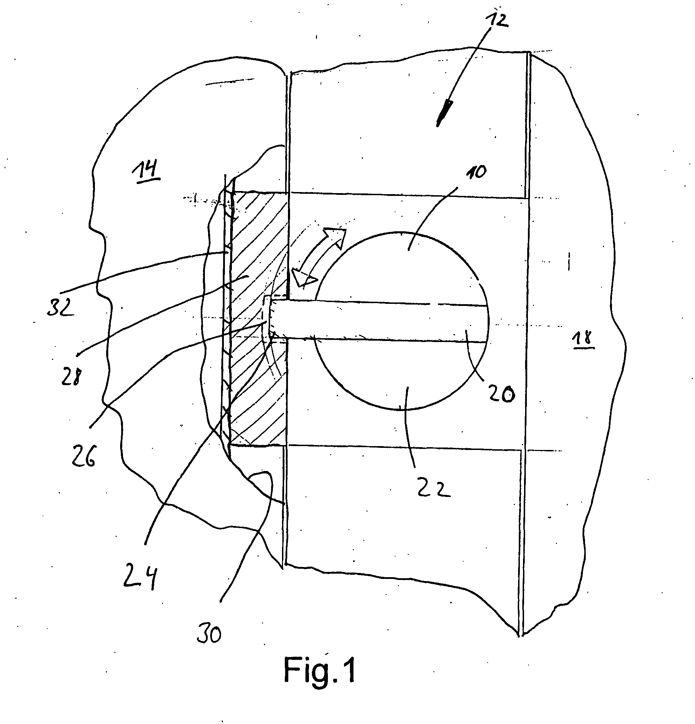

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt in
- Fig. 1: eine schematische Vorderansicht auf den Deckel eines Tankeinfüllstutzens, welcher hier in einer Dachsäule hinter einer Fahrzeugtür des Kraftwagens angeordnet ist.

In Fig.1 ist in schematischer Vorderansicht ein durch einen Deckel 10 verschlossener Tankeinfüllstutzen 12 eines Kraftwagens dargestellt. Von dem Kraftwagen ist dabei lediglich ausschnittsweise eine Fahrzeugtür 14, eine die Türöffnung rückseitig begrenzende, etwa vertikal verlaufende Dachsäule 16 und eine rückseitig an die Dachsäule 16 anschließende Seitenwand 18 schematisch dargestellt. Der Deckel 10 ist über ein nicht erkennbares Gewinde oder einen Bajonettverschluss auf den an die Randseite der Tür 14 angrenzenden Tankeinfüllstutzen 12 geschraubt. Der Deckel 14 umfasst einen stegartigen Griff 20, der gegenüber der übrigen Deckeloberfläche 22 nach außen vorsteht. Auf der von vorne betrachtet linken Seite umfasst der Griff 20 einen gegenüber dem Außenumfang des Deckels 10 überstehenden Endabschnitt 24. Dieser Endabschnitt 24 steht bei geschlossener Fahrzeugtür 14 mit einer an dessen Form angepassten Ausnehmung 26 eines türseitigen Verriegelungsmittels 28 in Eingriff, so dass ein Drehen des Deckels 10 bzw. ein Öffnen des Tankeinfüllstutzens 12 bei geschlossener Fahrzeugtür 14 verunmöglicht ist. Ist hingegen die Tür 14 geöffnet, so kommt die Ausnehmung 26 des türseitigen Verriegelungsmittels 28 außer Eingriff mit dem deckelseitigen Verriegelungsmittel (Endabschnitt 24), so dass der Deckel 10 abgeschraubt werden kann. Das türseitige Verriegelungsmittel 28, welches beispielsweise aus einem Kunststoff bestehen kann, ist hier von einer Türaußenbeplankung 30 überdeckt und an einem Stirnblech 32 an der Stirnseite der Tür 14 angeordnet. Dabei kann eine nicht gezeigte Türdichtung an der Stirnseite der Tür 14 über einen Längenabschnitt durch das türseitige Verriegelungsmittel 28 gebildet sein. Der Tankeinfüllstutzen 12 ist hier innerhalb der Dachsäule 16 des Kraftwagens angeordnet; gleichfalls wäre es jedoch auch denkbar, den Stutzen 16 in einem der Randseite der Tür 14 benachbarten Bereich der Seitenwand 18 anzuordnen. Außerdem ist unter dem hier verwendeten Begriff Tür auch ein Kofferraumdeckel oder dgl. Klappe zu verstehen.

## Patentansprüche

1. Kraftwagen mit einem Deckel (10) eines Tankeinfüllstutzens (12) und mit einer Wagentür (14) oder dgl., welche in ihrer Schließstellung das Öffnen des Deckels (10) verhindert und in einer Offenstellung das Öffnen des Deckels (10) ermöglicht, wobei der Tankeinfüllstutzen (12) an eine Randseite der Tür (14) angrenzt, wobei die Tür (14) mit Verriegelungsmittel (24) des Deckels (10) in Eingriff stehende weitere Verriegelungsmittel (28) aufweist,
**dadurch gekennzeichnet,**
**dass** der Deckel (10) einen Griff (20) mit einem gegenüber dem Außenumfang des Deckels (10) überstehenden Endabschnitt als Verriegelungsmittel (24) umfasst.

2. Kraftwagen nach Anspruch 1,
**dadurch gekennzeichnet,**
**dass** das türseitige Verriegelungsmittel (28) von einer Türaußenbeplankung (30) überdeckt an einer Stirnseite der Tür (10) angeordnet ist.

3. Kraftwagen nach Anspruch 2,
**dadurch gekennzeichnet,**
**dass** eine Türdichtung an der Stirnseite der Tür (10) über einen Abschnitt durch das türseitige Verriegelungsmittel (28) gebildet ist.

4. Kraftwagen nach Anspruch 1,
**dadurch gekennzeichnet,**
**dass** der Tankeinfüllstutzen (12) in einer Dachsäule (16) des Kraftwagens angeordnet ist.

## Claims

1. Motor vehicle with a cap (10) of a fuel filler neck (12) and with a vehicle door (14) or the like, which prevents the opening of the cap (10) in its closed position and allows the opening of the cap (10) in a open position, the fuel filler neck (12) adjoining an edge of the door (14) and the door being fitted with further locking means (28) in engagement with locking means (24) of the cap (10),
**characterised in that**
the cap (10) incorporates a handle (20) with an end section projecting from the outer circumference of the cap (10) for use as a locking means (24).

2. Motor vehicle according to claim 1,
**characterised in that**
the locking means (28) on the door is located on an end face of the door (10) and covered by an outer cladding (30) of the door.

3. Motor vehicle according to claim 2,
**characterised in that**
a door seal on the end face of the door (10) is provided by the locking means (28) on the door over a section.

4. Motor vehicle according to claim 1,
**characterised in that**
the fuel filler neck (12) is located in a pillar (16) of the motor vehicle.

## Revendications

1. Véhicule automobile avec un couvercle (10) d'un embout de remplissage de réservoir (12) et avec une portière de véhicule (14) ou similaire qui, dans sa position de fermeture, empêche l'ouverture du couvercle (10) et qui, dans une position ouverte, permet l'ouverture du couvercle (10), l'embout de remplissage de réservoir (12) étant adjacent d'un côté marginal de la portière (14) et la portière (14) comprenant d'autres moyens de verrouillage (28) qui sont en prise avec des moyens de verrouillage (24) du couvercle (10), **caractérisé en ce que** le couvercle (10) comprend en tant que moyen de verrouillage (24) une poignée (20) avec une section terminale qui est en dépassement par rapport au pourtour extérieur du couvercle (10).

2. Véhicule selon la revendication 1, **caractérisé en ce que** le moyen de verrouillage (28) situé du côté de la portière est disposé sur un côté frontal de la portière (10) en étant recouvert par un habillage extérieur (30) de la portière.

3. Véhicule selon la revendication 2, **caractérisé en ce qu'**un joint de portière est formé sur une section sur le côté frontal de la portière (10) par le moyen de verrouillage (28) situé du côté de la portière.

4. Véhicule selon la revendication 1, **caractérisé en ce que** l'embout de remplissage de réservoir (12) est disposé dans une colonne de toit (16) du véhicule automobile.
